# EUROPEAN PATENT SPECIFICATION

(11) **EP 4 458 587 B1**
(45) Date of publication and mention of the grant of the patent: **03.06.2026**
(21) Application number: 24168777.1
(22) Date of filing: 05.04.2024
(51) Int. Cl.: B60C 5/14, B60C 19/12

(54) **PUNCTURE RESISTANT TIRE**
PANNENSICHERER REIFEN
PNEU RÉSISTANT À LA PERFORATION

(30) Priority: 10.04.2023 US 202363495191 P; 12.03.2024 US 202418602401
(43) Date of publication of application: 06.11.2024
(73) Proprietor: The Goodyear Tire & Rubber Company, Akron, OH 44316 (US)
(72) Inventor: LIN, Cheng-Hsiung, Hudson, 44236 (US); AHRENS, Bodo, D-54295 Trier (DE)
(74) Representative: Kutsch, Bernd

(56) References cited:
- EP-B1- 1 099 573
- EP-B1- 1 426 201
- EP-B1- 1 655 126
- EP-B1- 1 688 239
- EP-B1- 1 842 698
- EP-B1- 2 335 913
- CA-C- 2 368 005
- US-A- 4 359 354

## Description

### FIELD OF THE INVENTION

The present invention relates generally to pneumatic tires, and more particularly to puncture resistant tires.

### BACKGROUND OF THE INVENTION

Prior art pneumatic tires are a multi-ply structure that depend on air in order to maintain their structural integrity. In order to retain the air, it is known to utilize one or more layers of plastic film to function as a puncture resistant structure. One problem with using a film is that it is restrained by the rubber due to the lamination, making it difficult to function as a puncture resistant layer. It is thus desired to have an improved pneumatic tire that overcomes the disadvantage of the prior art.

EP 1 688 239 B1 describes a tire in accordance with the preamble of claim 1.

Similar tires are also disclosed in EP 2 335 913 B1, EP 1 099 573 B1, EP 1 655 126 B1, EP 1 842 698 B1, EP 1 426 201 B1, US 4,359,354 A and CA 2 368 005 C.

### SUMMARY OF THE INVENTION

The invention relates to a tire in accordance with claim 1 and to a method in accordance with claim 14.

Dependent claims refer to preferred embodiments of the invention.

A pneumatic tire in accordance with a preferred aspect of the present invention comprises a carcass, a barrier layer and a puncture resistant layer. The puncture resistant layer has a maximum percent elongation of up to 300% and a tack value with the carcass of 5 N to 50 N at normal inflation pressure.

The puncture resistant layer is preferably located between the carcass and the air barrier layer, or radially inward of the air barrier layer.

In another preferred aspect of the invention, a method in accordance with the present invention comprises positioning a barrier layer on a tire drum, adding layers to the barrier layer to produce a tire assembly, wherein the layers comprise a puncture resistant layer and a carcass, wherein the puncture resistant layer is between the carcass and the barrier layer, wherein the puncture resistant layer is laminated to the carcass, and wherein the puncture resistant layer has a tack value with the carcass of 1 N to 10 N, and shaping and curing the tire assembly to produce a vulcanized tire assembly.

### DEFINITIONS

"Axial" and "axially" mean lines or directions that are parallel to the axis of rotation of the tire.

"Circumferential" means lines or directions extending perpendicular to the axial direction.

"Inner" or "inwardly" means toward the inside of the tire.

"Normal inflation pressure" refers to the specific design inflation pressure and load assigned by the appropriate standards organization for the service condition for an individual tire.

"Outer" or "outwardly" means toward the outside of the tire.

"Pneumatic Tire" means a laminated mechanical device of generally toroidal shape (usually an open-torus) having beads and a tread and made of rubber, chemicals, fabric and steel or other materials. When mounted on the wheel of a motor vehicle, the tire through its tread provides traction and contains the fluid that sustains the vehicle load.

"Radial" and "radially" are used to mean directions radially toward or away from the axis of rotation of the tire.

"Tread" means a molded rubber component, which includes that portion of the tire that comes into contact with the road when the tire is normally inflated and under normal load. The tread has a depth conventionally measured from the tread outer surface to the bottom of the deepest groove of the tire.

"Tread block" or "Tread element" or "Traction element" means a rib or a block element defined by a shape having adjacent grooves.

### BRIEF DESCRIPTION OF THE DRAWINGS

The invention will be described by way of example and with reference to the accompanying drawings in which:
FIG. 1A is a cross-sectional view of a first example of a pneumatic tire.
FIG. 1B is a cross-sectional view of a second example of a pneumatic tire.
FIG. 2A is a close-up view of the layers of the pneumatic tire shown in Fig. 1A.
FIG. 2B is a close-up view of Fig. 2A after puncture by a sharp object 30, specifically illustrated as a nail.
FIG. 2C is an alternate embodiment of the tire of the present invention.

### DETAILED DESCRIPTION OF PREFERRED EMBODIMENTS OF THE INVENTION

The present invention relates generally to pneumatic tires that preferably include a highly deformable, puncture resistant layer. The puncture resistant tires of the present invention may be used in multiple applications, for example, as race tires, passenger tires, aircraft tires, agricultural tires, earthmover tires, off-the-road tires, or commercial (or truck) tires. At least in some preferred embodiments, the puncture resistant layers of the present invention have several advantages including a high percent elongation, which allows the puncture resistant layers to be deformable yet retain their integrity and not puncture when contacted with a sharp object (e.g., a nail or a screw) that has penetrated an outer portion of the tire (e.g., the tread or the sidewall) and the carcass of the tire.

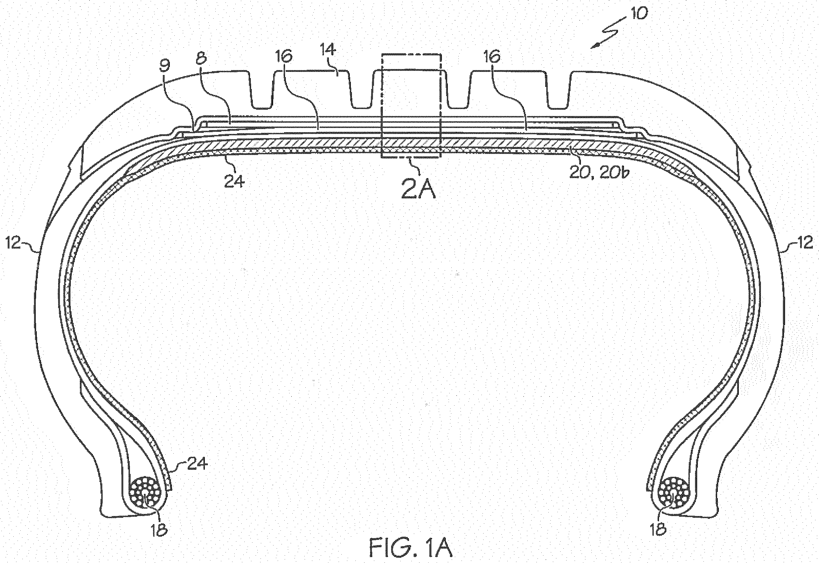

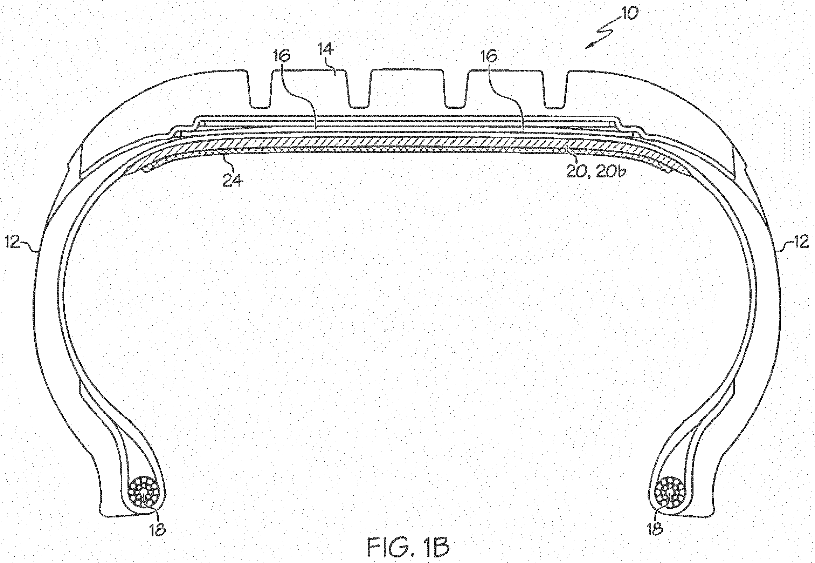

FIGS. 1A and 1B illustrate a first embodiment of a pneumatic tire 10 of the present invention that includes opposed sidewalls 12 that extend radially inward from the axial outer edges of a tread 14, and wherein each sidewall is joined to a respective inextensible bead 18. The pneumatic tire further includes a first and second belt 8, 9 and a carcass 16 composed of one or more layers of reinforced ply. The one or more layers of reinforced ply extend under the crown and from one bead 18 to the other bead and are secured thereto.

The pneumatic tire includes a puncture resistant layer 20 which is preferably located radially inward of the carcass 16. The puncture resistant layer 20 is preferably a continuous layer that preferably extends underneath the tread only, although it may also extend under the tread and along the inner surface of the sidewalls.

The puncture resistant layer 20 is preferably highly deformable. The puncture resistant layer 20 preferably has a maximum percent elongation of 300% or more (or in the range of 50% to 300%, or 50% to 150%, or 100% to 300% depending upon the desired result) (ASTM D412-16 (2021)). The elongation requirement may depend on other properties of the puncture resistant layer including puncture resistance strength and delamination strength (tack between the carcass 16 and the puncture resistant layer 20). Preferably, the puncture resistant layer's puncture resistance strength is higher than the delamination strength (tack between the carcass 16 and the puncture resistant layer 20 and/or tack between the puncture resistant layer 20 and the air barrier layer 24).

Preferably, the puncture resistant layer's puncture resistance strength (ASTM F1306-21) is at least 2 times higher, or 2 times higher to 10 times higher, or 2 times higher to 5 times higher, or 3 times higher to 6 times higher, or 5 times higher to 10 times higher than the delamination strength expressed by its post cure tack value with the carcass 16 and/or with the air barrier layer 24 and as measured at normal inflation pressure in accordance with ASTM D624-00 - Type C configuration.

The pneumatic tire 10 further includes an air barrier layer 24. The puncture resistant layer 20 can serve as a shield that inhibits the sharp object 30 from otherwise penetrating the air barrier layer 24. At least because the puncture resistant layer 20 protects the structural integrity of the air barrier layer 24 from the intrusion of the sharp object 30, gas (e.g., air) can continue to be held within the penetrated tire 10c despite a hole in the tread portion 14 and the carcass 16 generated by the sharp object 30.

As the sharp object 30 is removed from the penetrated tire 10c, the force pushing on the puncture resistant layer 20 and the air barrier layer 24 away from the carcass 16 is reduced until it is ultimately removed. Accordingly, the inflation pressure of the penetrated tire can push the puncture resistant layer 20, and/or the air barrier layer 24 back towards the carcass 16 as the sharp object 30 is removed. Advantageously, after the sharp object 30 is removed, the normal inflation pressure may cause the puncture resistant layer 20 to self-adhere (e.g., reestablish contact) to the carcass 16 and allow the puncture resistant layer 20 and barrier layer 24 to at least substantially return to their original configuration.

The puncture resistant layers described herein may comprise a rubber or thermoplastic material, preferably in the form of a thermoplastic film. The composition of the puncture resistant layer depends on the composition of the layer of the carcass to which the puncture resistant layer is laminated in the assembled tire and the normal inflation pressure of the tire. The composition of the puncture resistant layer is selected to achieve the desired tack value (e.g., 5 N to 50 N at normal inflation pressure) with the carcass layer. A tack value between the carcass 16 and the puncture resistant layer 20 at normal inflation pressure should be 50 Newtons (N) or less (or in the range of 5 N to 50 N) (ASTM D624-00 Type C configuration).

The amount of tack between the carcass 16 and the puncture resistant layer 20 can be controlled by the composition of each of said components, including the composition of the rubber and any additives in said rubber. The puncture resistant layer 20, in some instances, may be self-adhered to the carcass 16 without an adhesive therebetween, which would increase the tack between the two components.

The puncture resistant layers of the present invention preferably have a thickness ranging, for example, from 0.025 cm to 0.25 cm or from 0.05 cm to 0.2 cm.

The air barrier layer 24 may be made of a butyl rubber compound, halo butyl compound or other conventional air barrier material known to those skilled in the art of tire building. The air barrier layer of the tire can define a thermoformable film of polymeric material, such as nylon or blend of nylon and rubber. Further examples include: nylon 6, nylon **11,** and/or nylon 12, which are manufactured from the corresponding lactams. Suitable nylon thermoformable films include, but are not limited to, DARTEK^{™} films available from DuPont of Wilmington, Delaware. In addition, the polymeric material of the thermoformable films may include: polycondensates of aromatic dicarboxylic acids, e.g., isophthalic acid or terephthalic acid, with diamines, e.g., hexamethylenediamine, or octamethylenediamine, polycarbonates of aliphatic starting materials, e.g., m- and p-xylylenediamines, with adipic acid, suberic acid and sebacic acid, and polycondensates based on alicyclic starting materials, e.g., cyclohexanedicarboxylic acid, cyclohexanediacetic acid, 4,4'-diaminodicyclohexylmethane and 4,4'-diaminodicyclo-hexylpropane. The rubber used in the blend may include a natural and/or synthetic rubber. In one or more examples, the rubber includes butyl rubber, styrene butadiene rubber, and/or natural rubber.

The air barrier layer may also comprise butyl rubber or bromobutyl rubber with an inclusion of an ethylene vinyl copolymer (EVOH). The air barrier layer may also comprise a microlayer polymer composite film comprising alternating layers of polyurethane and an ethylene vinyl alcohol copolymer (EVOH). The alternating layers preferably have thicknesses ranging from 0.01 microns to 2.5 microns. Preferably, there is from 10 to 1000 layers.

The air barrier layer 24 may be located radially inward of the puncture resistance layer so that the air barrier layer is the radially innermost layer, or located between the carcass and the puncture resistance layer.

The air barrier layer 24 is located radially inward of the tread, and may optionally extend between the inextensible beads 18. Alternatively, as illustrated in FIG. 1B, the innermost barrier layer 24 may have dimension along the inside of the pneumatic tire 10 that mirror that of the puncture resistant layer 20b.

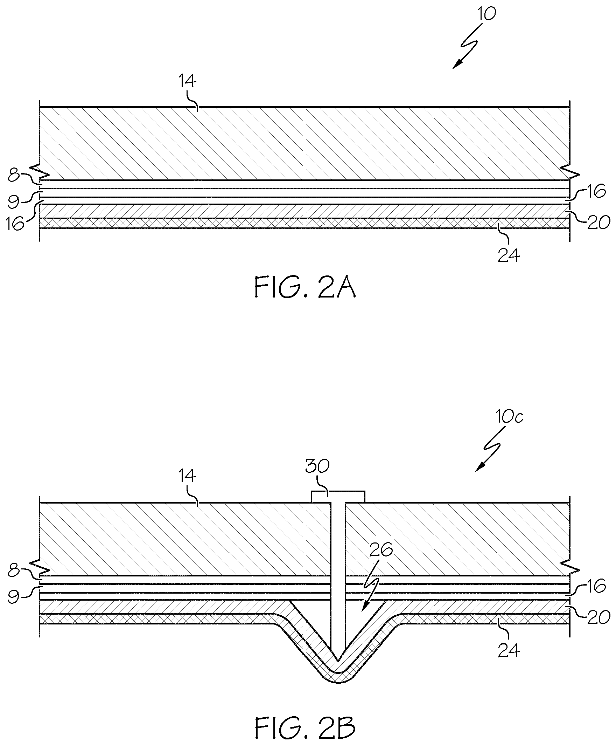

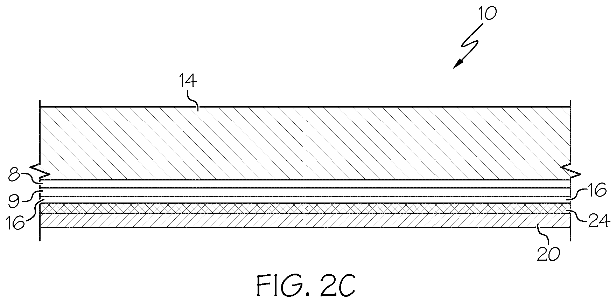

FIG. 2B shows the components of the pneumatic tire 10 of FIG. 2A where a sharp object 30, specifically illustrated as a nail, has penetrated the tread portion **14** and the carcass 16 to yield a punctured tire. A portion 26 of the puncture resistant layer 20 in proximity to the sharp object 30 has separated from the carcass 16 and deformed but not punctured, thereby protecting the barrier layer 24 from puncture. In contrast, puncture resistant layers in traditional tire compositions cannot deform as much, if at all.

The production of the tire including assembly of the components and curing thereof may be according to production methods conventionally known in the art. For example, assembly of a puncture resistant tire of the present invention can comprise applying the puncture resistant layer and the air barrier layer inside a green stage two tire carcass that has been shaped into a torus prior to vulcanization.

The production of the tire including assembly of the components and curing thereof may be according to production methods conventionally known in the art. For example, assembly of a puncture resistant tire of the present invention can comprise forming a green stage 2 tire carcass in the conventional manner, with or without the inner liner. A protective, removable liner is preferably used that is the radially innermost layer. After the tire is cured, the removable liner can be removed, and the puncture resistant layer and air barrier layer may be applied.

Further, as an additional advantage, once the sharp object is removed from the pneumatic tire, the puncture resistant layer may return to its original shape (or close to its original shape) and re-engage the carcass at the puncture site, bringing the puncture resistant layer and the underlying layers at least substantially back to their original configuration. This may allow for continued use of the pneumatic tire with minimal effect on the tire lifetime.

## Claims

1. A pneumatic tire comprising a carcass (16), an air barrier layer (24) and a puncture resistant layer (20, 20b), wherein
(i) the puncture resistant layer (20, 20b) is located adjacent to the carcass (16); and/or
(ii) the puncture resistant layer (20, 20b) is located adjacent to the air barrier layer (24);
**characterized in that** the puncture resistant layer (20, 20b) has a post cure tack value with the air barrier layer (24) of less than 50 N as measured at normal inflation pressure in accordance with ASTM D624-00 - Type C configuration.

2. The pneumatic tire of claim 1, wherein the puncture resistant layer (20, 20b) is adhered to the air barrier layer (24).

3. The pneumatic tire of claim 1 or 2, wherein the puncture resistant layer (20, 20b) has a thickness in a range of from 0.025 cm to 0.25 cm or in a range of from 0.05 cm to 0.2 cm.

4. The pneumatic tire of at least one of the previous claims, wherein the puncture resistant layer (20, 20b) is adhered to the carcass (16) without an adhesive therebetween.

5. The pneumatic tire of at least one of the previous claims, wherein the puncture resistant layer (20, 20b) has an elongation at break of at least 300%.

6. The pneumatic tire of at least one of the previous claims 1 to 4, wherein the puncture resistant layer (20, 20b) has a maximum percent elongation of up to 300% as measured in accordance with ASTM D412-16 (2021).

7. The pneumatic tire of at least one of the previous claims, wherein the puncture resistant layer (20, 20b) extends underneath the tread (14) and/or extends along a portion of the carcass (16) and does not wrap around tire beads (18).

8. The pneumatic tire of at least one of the previous claims, wherein the air barrier layer (24) is a microlayer polymer composite film comprising alternating layers of polyurethane and an ethylene vinyl alcohol copolymer(EVOH).

9. The pneumatic tire of at least one of the previous claims 1 to 7, wherein the air barrier layer (24) is a butyl rubber or bromobutyl rubber with an inclusion of an ethylene vinyl copolymer (EVOH).

10. The pneumatic tire of at least one of the previous claims, wherein the puncture resistant layer (20) has a maximum percent elongation in a range of from 50% to 300% or in a range of from 50% to 150% or in a range of from 100% to 300%, as measured in accordance with ASTM D412-16 (2021).

11. The pneumatic tire of at least one of the previous claims, wherein the puncture resistant layer's puncture resistance strength as measured in accordance with ASTM F1306-21 is higher, preferably at least 2 times higher or 2 to 10 times higher, than the puncture resistant layer's delamination strength expressed by its post cure tack value with the carcass (16) and/or with the air barrier layer (24) as measured at normal inflation pressure in accordance with ASTM D624-00 - Type C configuration.

12. The pneumatic tire of at least one of the previous claims, wherein the puncture resistant layer (20, 20b) is located adjacent to the carcass (16), and wherein the puncture resistant layer (20, 20b) has a post cure tack value with the carcass (16) in a range of from 5 N to 50 N as measured at normal inflation pressure in accordance with ASTM D624-00 - Type C configuration.

13. The pneumatic tire of at least one of the previous claims, wherein the puncture resistant layer (20, 20b) is located adjacent to the air barrier layer (24) and wherein the puncture resistant layer (20, 20b) has a post cure tack value with the air barrier layer (24) in a range of from 5 N to 50 N as measured at normal inflation pressure in accordance with ASTM D624-00 - Type C configuration.

14. A method of manufacturing a pneumatic tire in accordance with at least one of the previous claims, the method comprising:
positioning an air barrier layer (24) on a tire drum;
adding layers to the air barrier layer (24) to produce a tire assembly, wherein the layers comprise a puncture resistant layer (20, 20b) and a carcass (16);
and shaping and curing the tire assembly to produce a vulcanized pneumatic tire (10),
wherein the puncture resistant layer (20, 20b) has a post cure tack value with the air barrier layer (24) of less than 50 N as measured at normal inflation pressure in accordance with ASTM D624-00 - Type C configuration.

## Patentansprüche

1. Luftreifen, der Folgendes umfasst: eine Karkasse (16), eine Schicht (24), die eine Luftdichtung bereitstellt, und eine Schicht (20, 20b), die einen Pannenschutz bereitstellt, wobei:
(i) die Schicht (20, 20b), die einen Pannenschutz bereitstellt, angrenzend an die Karkasse (16) angebracht ist; und/oder
(ii) die Schicht (20, 20b), die einen Pannenschutz bereitstellt, angrenzend an die Schicht (24), die eine Luftdichtung bereitstellt, angebracht ist;
**dadurch gekennzeichnet, dass** die Schicht (20, 20b), die einen Pannenschutz bereitstellt, nach ihrer Vulkanisierung mit der Schicht (24), die eine Luftdichtung bereitstellt, einen Haftwert von weniger als 50 N aufweist, wie er unter normalem Aufblasdruck in Übereinstimmung mit der Norm ASTM D624-00 - Form C gemessen wird.

2. Luftreifen nach Anspruch 1, wobei die Schicht (20, 20b), die einen Pannenschutz bereitstellt, an der Schicht (24), die eine Luftdichtung bereitstellt, haftet.

3. Luftreifen nach Anspruch 1, wobei die Schicht (20, 20b), die einen Pannenschutz bereitstellt, eine Dicke aufweist, die in einem Bereich von 0,025 cm bis 0,25 cm oder in einem Bereich von 0,05 cm bis 0,2 cm liegt.

4. Luftreifen nach mindestens einem der vorhergehenden Ansprüche, wobei die Schicht (20, 20b), die einen Pannenschutz bereitstellt, an der Karkasse (16) haftet, ohne dass dazwischen ein Klebstoff vorhanden ist.

5. Luftreifen nach mindestens einem der vorhergehenden Ansprüche, wobei die Schicht (20, 20b), die einen Pannenschutz bereitstellt, eine Bruchdehnung aufweist, die mindestens 300% beträgt.

6. Luftreifen nach mindestens einem der vorhergehenden Ansprüche 1 bis 4, wobei die Schicht (20, 20b), die einen Pannenschutz bereitstellt, eine maximale prozentuale Bruchdehnung aufweist, die bis zu 300 % beträgt, wie sie in Übereinstimmung mit der Norm ASTM D412-16 (2021) gemessen wird.

7. Luftreifen nach mindestens einem der vorhergehenden Ansprüche, wobei die Schicht (20, 20b), die Pannenschutz bereitstellt, sich unterhalb der Lauffläche (14) erstreckt und/oder sich entlang eines Abschnitts der Karkasse (16) erstreckt und sich nicht um die Wülste (18) des Reifens wickelt.

8. Luftreifen nach mindestens einem der vorhergehenden Ansprüche, wobei die Schicht (24), die eine Luftdichtung bereitstellt, einen aus Mikroschichten bestehenden Polymerverbundfilm umfasst, der abwechselnd angebrachten Schichten aus Polyurethan und Ethylen-Vinylalkohol-Copolymer (EVOH) umfassen.

9. Luftreifen gemäß mindestens einem der vorstehenden Ansprüche 1 bis 7, wobei die Schicht (24), die eine Luftdichtung bereitstellt, ein Butylkautschuk oder ein Bromobutylkautschuk mit einer Inklusion eines Ethylen-Vinylalkohol-Copolymers (EVOH) darstellt.

10. Luftreifen nach mindestens einem der vorstehenden Ansprüche, wobei die Schicht (20), die einen Pannenschutz bereitstellt, eine maximale prozentuale Bruchdehnung aufweist, die in einem Bereich von 50 % bis 300 % oder in einem Bereich von 50 % bis 150 % oder in einem Bereich von 100 % bis 300 % liegt, wie sie in Übereinstimmung mit der Norm ASTM D412-16 (2021) gemessen wird.

11. Luftreifen gemäß mindestens einem der vorstehenden Ansprüche, wobei der Pannenschutz, der durch die Pannenschutz-Schicht bereitgestellt wird, wie er in Übereinstimmung mit der Norm ASTM F1306-21 gemessen wird, nach der Vulkanisierung höher ist, vorzugsweise mindestens doppelt so hoch oder 2- bis 10-mal so hoch wie die Ablösefestigkeit der Schicht, die einen Pannenschutz bereitstellt, die durch seine Haftfestigkeit an der Karkasse (16) und/oder an der Schicht (24), die eine Luftdichtung bereitstellt, bestimmt wird, wie sie unter normalem Reifendruck in Übereinstimmung mit der Norm ASTM D624-00 - Form vom Typ C gemessen wird.

12. Luftreifen nach mindestens einem der vorstehenden Ansprüche, wobei die Schicht (20, 20b), die einen Pannenschutz bereitstellt, angrenzend an die Karkasse (16) angebracht ist; und wobei die Schicht (20, 20b), die einen Pannenschutz bereitstellt, nach ihrer Vulkanisierung mit der Karkasse (16), einen Haftwert aufweist, der in dem Bereich von 5 N bis 50 N liegt, wie er unter normalem Reifendruck in Übereinstimmung mit der Norm ASTM D624-00 - Form C gemessen wird.

13. Luftreifen nach mindestens einem der vorstehenden Ansprüche, wobei die Schicht (20, 20b), die einen Pannenschutz bereitstellt, angrenzend an die Schicht (24), die eine Luftdichtung bereitstellt, angebracht ist; und wobei die Schicht (20, 20b), die nach ihrer Vulkanisierung mit der Schicht (24), die eine Luftdichtung bereitstellt, einen Haftwert aufweist, der in dem Bereich von 5 N bis 50 N liegt, wie sie unter normalem Reifendruck in Übereinstimmung mit der Norm ASTM D624-00 - Form C gemessen wird.

14. Verfahren zur Herstellung eines Luftreifens gemäß mindestens einem der vorstehenden Ansprüche, wobei das Verfahren das Folgende umfasst:
das Anbringen einer Schicht (24), die eine Luftdichtung bereitstellt, auf einer Trommel für einen Reifen;
das Hinzufügen von Schichten derart zu der Schicht (24), die eine Luftdichtung bereitstellt, dass eine Baugruppe in Form eines Reifens erzielt wird; wobei die Schichten eine Schicht (20, 20b), die einen Pannenschutz bereitstellt, und eine Karkasse (16) umfassen;
und das Formen und Vulkanisieren der Baugruppe in Form eines Reifens, sodass ein vulkanisierter Luftreifen (10) erzielt wird;
wobei die Schicht (20, 20b), die einen Pannenschutz bereitstellt, nach ihrer Vulkanisierung mit der Schicht (24), die eine Luftdichtung bereitstellt, einen Haftwert von weniger als 50 N aufweist, wie er unter normalem Reifendruck gemäß der Norm ASTM D624-00 - Form vom Typ C gemessen wird.

## Revendications

1. Bandage pneumatique qui comprend une carcasse (16), une couche (24) qui procure une étanchéité à l'air et une couche (20, 20b) qui procure une résistance aux crevaisons ; dans lequel :
(i) la couche (20, 20b) qui procure une résistance aux crevaisons est disposée en position adjacente à la carcasse (16) ; et/ou
(ii) la couche (20, 20b) qui procure une résistance aux crevaisons est disposée en position adjacente à la couche (24) qui procure une étanchéité à l'air ;
**caractérisé en ce que** la couche (20, 20b) qui procure une résistance aux crevaisons, après sa vulcanisation avec la couche (24) qui procure une étanchéité à l'air, possède une valeur d'adhérence qui est inférieure à 50 N, telle qu'on la mesure sous une pression de gonflage normale en conformité avec la norme ASTM D624-00 - configuration de type C.

2. Bandage pneumatique selon la revendication 1, dans lequel la couche (20, 20b) qui procure une résistance aux crevaisons adhère à la couche (24) qui procure une étanchéité à l'air.

3. Bandage pneumatique selon la revendication 1, dans lequel la couche (20, 20b) qui procure une résistance aux crevaisons possède une épaisseur qui se situe dans une plage allant de 0,025 cm à 0,25 cm ou dans une plage allant de 0,05 cm à 0,2 cm.

4. Bandage pneumatique selon au moins une des revendications précédentes, dans lequel la couche (20, 20b) qui procure une résistance aux crevaisons adhère à la carcasse (16) en l'absence d'un adhésif entre les deux.

5. Bandage pneumatique selon au moins une des revendications précédentes, dans lequel la couche (20, 20b) qui procure une résistance aux crevaisons possède un allongement à la rupture qui s'élève à au moins 300 %.

6. Bandage pneumatique selon au moins une des revendications précédentes 1 à 4, dans lequel la couche (20, 20b) qui procure une résistance aux crevaisons possède un allongement maximal en pour cent après rupture qui s'élève jusqu'à 300 %, tel qu'on le mesure en conformité avec la norme ASTM D412-16 (2021).

7. Bandage pneumatique selon au moins une des revendications précédentes, dans lequel la couche (20, 20b) qui procure une résistance aux crevaisons s'étend en dessous de la bande de roulement (14) et/ou s'étend le long d'une portion de la carcasse (16) et ne vient pas s'enrouler autour des talons (18) du bandage.

8. Bandage pneumatique selon au moins une des revendications précédentes, dans lequel la couche (24) qui procure une étanchéité à l'air représente un film composite polymère constitué par des microcouches, qui comprend des couches de polyuréthane et d'un copolymère d'éthylène alcool vinylique (EVOH) disposées en alternance.

9. Bandage pneumatique selon au moins une des revendications précédentes 1 à 7, dans lequel la couche (24) qui procure une étanchéité à l'air représente un caoutchouc butyle ou bromobutyle avec une inclusion d'un copolymère éthylène alcool vinylique (EVOH).

10. Bandage pneumatique selon au moins une des revendications précédentes, dans lequel la couche (20) qui procure une résistance aux crevaisons possède un allongement maximal en pour cent après rupture qui se situe dans une plage allant de 50 % à 300 % ou dans une plage allant de 50 % à 150 % ou dans une plage allant de 100 % à 300 %, tel qu'on le mesure en conformité avec la norme ASTM D412-16 (2021).

11. Bandage pneumatique selon au moins une des revendications précédentes, dans lequel la résistance aux crevaisons que procure la couche qui procure une résistance aux crevaisons, telle qu'on la mesure en conformité avec la norme ASTM F1306-21, est supérieure, de préférence supérieure à raison d'au moins 2 fois ou de 2 à 10 fois supérieure, à la résistance au décollement que procure, après la vulcanisation, la couche qui procure une résistance aux crevaisons, telle qu'on l'exprime par l'intermédiaire de sa valeur d'adhérence à la carcasse (16) et/ou à la couche (24) qui procure une étanchéité à l'air, telle qu'on la mesure sous une pression de gonflage normale en conformité avec la norme ASTM D624-00 - configuration de type C.

12. Bandage pneumatique selon au moins une des revendications précédentes, dans lequel la couche (20, 20b) qui procure une résistance aux crevaisons est disposée en position adjacente à la carcasse (16) ; et dans lequel la couche (20, 20b) qui procure une résistance aux crevaisons après sa vulcanisation avec la carcasse (16), possède une valeur d'adhérence qui se situe dans une plage allant de 5 N à 50 N, telle qu'on la mesure sous une pression de gonflage normale en conformité avec la norme ASTM D624-00 - configuration de type C.

13. Bandage pneumatique selon au moins une des revendications précédentes, dans lequel la couche (20, 20b) qui procure une résistance aux crevaisons est disposée en position adjacente à la couche (24) qui procure une étanchéité à l'air ; et dans lequel la couche (20, 20b) qui procure une résistance aux crevaisons après sa vulcanisation avec la couche (24) qui procure une étanchéité à l'air, possède une valeur d'adhérence qui se situe dans une plage allant de 5 N à 50 N, telle qu'on la mesure sous une pression de gonflage normale en conformité avec la norme ASTM D624-00 - configuration de type C.

14. Procédé de confection d'un bandage pneumatique en conformité avec au moins une des revendications précédentes, dans lequel le procédé comprend le fait de :
disposer une couche (24) qui procure une étanchéité à l'air sur un tambour destiné à un bandage ;
ajouter des couches à la couche (24) qui procure une étanchéité à l'air d'une manière telle que l'on obtient un assemblage sous la forme d'un bandage ; dans lequel les couches comprennent une couche (20, 20b) qui procure une résistance aux crevaisons et une carcasse (16) ;
et façonner et vulcaniser l'assemblage sous la forme d'un bandage d'une manière telle que l'on obtient un bandage pneumatique vulcanisé (10) ;
dans lequel la couche (20, 20b) qui procure une résistance aux crevaisons après sa vulcanisation avec la couche (24) qui procure une étanchéité à l'air, possède une valeur d'adhérence qui est inférieure à 50 N, telle qu'on la mesure sous une pression de gonflage normale en conformité avec la norme ASTM D624-00 - configuration de type C.
